# EUROPÄISCHE PATENTSCHRIFT

(11) **EP 3 281 762 B1**
(45) Veröffentlichungstag und Bekanntmachung des Hinweises auf die Patenterteilung: **23.09.2020**
(21) Anmeldenummer: 17184332.9
(22) Anmeldetag: 01.08.2017
(51) Int. Cl.: B29C 45/28

(54) **SPRITZGIESSMASCHINE MIT ADAPTERPLATTEN**
INJECTION MOULDING MACHINE WITH ADAPTER PLATES
MACHINE À MOULAGE PAR INJECTION COMPRENANT PLAQUES D'ADAPTATEUR

(30) Priorität: 09.08.2016 DE 102016114706
(43) Veröffentlichungstag der Anmeldung: 14.02.2018
(73) Patentinhaber: MHT Mold & Hotrunner Technology AG, 65239 Hochheim (DE)
(72) Erfinder: Wagner, Christian, 55126 Mainz (DE); Schweininger, Stefan, 65197 Wiesbaden (DE); Koziollek, Silvester, 65239 Hochheim am Main (DE)
(74) Vertreter: WSL Patentanwälte Partnerschaft mbB

(56) Entgegenhaltungen:
- EP-A1- 1 142 686
- US-A- 4 173 448
- US-A- 4 747 770
- US-A1- 2012 156 324
- US-A1- 2013 230 617

## Beschreibung

Die vorliegende Erfindung betrifft eine Spritzgießmaschine mit einem Heißkanal zur Zuführung einer plastifizierten Schmelze in einer Mehrzahl von Formwerkzeugen, einer Mehrzahl von Verschlussnadeln zum wahlweisen Verschließen oder Öffnen des Heißkanals, wobei jede Verschlussnadel einen mit dieser verbundenen Kolben aufweist, der in einem Gehäuse mit einer Öffnung angeordnet ist und das Gehäuse in eine erste und eine zweite Kammer unterteilt, und einer Abdeckplatte, wobei das Gehäuse einen ersten Fluideinlass, der mit der ersten Kammer in Verbindung steht, und einen zweiten Fluideinlass, der mit der zweiten Kammer in Verbindung steht, aufweist. Der erste und der zweite Fluideinlass sind derart angeordnet, dass Fluid in das Gehäuse überführt werden kann, so dass der Kolben beidseitig mit Fluid beaufschlagt werden kann.

Durch die Beaufschlagung des Kolbens mit Fluid kann somit die mit dem Kolben verbundene Verschlussnadel hin- und herbewegt werden, so dass mit Hilfe des Fluids der Heißkanal gezielt geöffnet werden kann, um plastifizierte Schmelze in das jeweilige Formwerkzeug zu überführen.

Die Abdeckplatte verschließt die Öffnung des Gehäuses. Eine solche Spritzgießmaschine ist beispielsweise in der US 4,173,448 beschrieben.

Bei der dort gezeigten Ausführungsform weist die Abdeckplatte Ausnehmungen auf, in die das Gehäuse hineinragt, so dass das Gehäuse zum Teil innerhalb der Ausnehmung angeordnet ist.

Da durch den Heißkanal die im Allgemeinen erhitzte plastifizierte Schmelze zugeführt wird und ein Heißkanalblock, in dem der Heißkanal angeordnet ist, aufgrund einer Vielzahl von darin angeordneten mit jeweils einem Kolben verbundenen Verschlussnadeln eine erhebliche Ausdehnung besitzt, verändert sich bei der Inbetriebnahme der Spritzgießmaschine die exakte Position der Verschlussnadel relativ zu der Abdeckplatte aufgrund der mit der Temperaturerhöhung verbundenen thermischen Ausdehnung von Gehäuse und Heißkanalblock.

Dies führt zum einen dazu, dass das Gehäuse bei einer Erwärmung des Heißkanalblocks und des damit verbundenen Gehäuses sich in Richtung Abdeckplatte ausdehnt. Zudem kommt es jedoch auch zu einer Verschiebung des Gehäuses senkrecht zur Nadelachse, so dass bei der Dimensionierung der Fluidauslassöffnung der Abdeckplatte und der Fluideinlassöffnung des Gehäuses darauf zu achten ist, dass diese möglichst sowohl im kalten Zustand als auch bei Betriebstemperatur miteinander fluchten, um eine Übergabe des Fluids von der Abdeckplatte in das Gehäuse bei allen Temperaturen zu gewährleisten.

Bei der eingangs genannten US 4,173,448 sind in der Gehäusewand mehrere Kanäle eingebracht, die den zweiten Fluideinlass des Gehäuses mit der zweiten Kammer verbinden. Der Fluideinlass des Gehäuses wird durch eine ringförmige Nut gebildet, in deren Nutgrund die Kanäle enden. Um sicherzustellen, dass der Fluidauslass der Abdeckplatte und der Fluideinlass des Gehäuses über einen weiten Temperaturbereich zumindest teilweise miteinander fluchten, so dass eine Fluidübergabe gewährleistet ist, muss daher die Gehäusewand relevant dick ausgeführt werden, um entsprechend große Kanalbohrungen einbringen zu können. Dennoch kann es, wenn Gehäuse und Abdeckplatte nicht perfekt zueinander ausgerichtet sind, bei einer Temperaturänderung passieren, dass keine zufriedenstellende Fluidübergabe zwischen Abdeckplatte und Gehäuse mehr möglich ist, was zu einer verminderten oder gar fehlenden Steuermöglichkeit des Verschlussventils führen kann.

Daher ist in der DE 10 2011 002 586 A1 bereits ein Adapterelement mit einer Fluideinlassöffnung und einer Fluidauslassöffnung vorgeschlagen worden, welches derart ausgestaltet ist, dass das von der Abdeckplatte über die zweite Fluidauslassöffnung bereitgestellte Fluid über die Fluideinlassöffnung in das Adapterelement und über die Fluidauslassöffnung von dem Adapterelement in die zweite Fluideinlassöffnung des Gehäuses geführt werden kann. Die US 2013/0230617 A1 zeigt eine Ausführungsform einer Heißkanalplatte, bei welcher die Kolbengehäuse an der Abdeckplatte anliegen. Diese Ausführungsform ist jedoch relativ aufwändig, da für jedes Kolbengehäuse ein separates Adapterelement zur Verfügung gestellt werden muss. Ausgehend von dem beschriebenen Stand der Technik ist es daher Aufgabe der vorliegenden Erfindung, eine Spritzgießmaschine der eingangs genannten Art bereitzustellen, welche die beschriebenen Probleme löst oder zumindest verringert und einfacher aufgebaut ist.

Erfindungsgemäß wird dies durch die Spritzgießmaschine gemäß Anspruch 1 gelöst. Vorteilhafte Weiterbildungen dieses erfindungsgemäßen Gegenstandes sind in den abhängigen Ansprüchen 2 bis 14 definiert.

Als erstes und zweites Steuerfluid kann beispielsweise Druckluft verwendet werden. Alternativ können auch andere Gase oder Flüssigkeiten, wie z.B. Hydrauliköl, verwendet werden.

Es wird somit eine Adapterplatte zur Anpassung einer Mehrzahl von Kolbengehäusen an die Abdeckplatte vorgesehen. Abgesehen davon, dass die Adapterplatte nun eine Mehrzahl von Adapterelementen des Standes der Technik ersetzt und daher einfacher aufgebaut ist, weist die Adapterplatte auch einen gemeinsamen ersten und zweiten Fluidkanal auf, der zur Versorgung der Mehrzahl der Kolbengehäuse mit Steuerfluid dient. Die Abdeckplatte muss daher nicht mehr für jedes Kolbengehäuse entsprechende Fluideinlässe bzw. -auslässe aufweisen. Stattdessen sind diese Einlässe bzw. Auslässe in der Adapterplatte angeordnet, die von einem ersten bzw. zweiten Fluidkanal versorgt werden. Die Zuführung des Steuerfluids in die Adapterplatte kann entweder über entsprechende Fluidauslässe in der Abdeckplatte erfolgen oder unabhängig von der Abdeckplatte beispielsweise mittels Steuerfluidschläuchen bereitgestellt werden. Insbesondere im letzteren Fall kann die Abdeckplatte deutlich preisgünstiger hergestellt werden, da das Einbringen von extrem langen Langlöchern zur Ausbildung entsprechender Steuerfluidkanäle entfallen kann.

Mit Vorteil unterscheidet sich der Querschnitt des ersten Fluidkanaleinlasses von den Querschnitten der ersten Fluidkanalauslässen, wobei vorzugsweise sich auch der Querschnitt des zweiten Fluidkanaleinlasses von den Querschnitten der zweiten Fluidkanalauslässen unterscheidet. Dadurch ist gewährleistet, dass über die Fluidkanaleinlässe der Adapterplatte genügend große Menge Fluid in die Fluidkanäle eingebracht werden kann, so dass alle Fluidkanalauslässe mit Steuerfluid versorgt werden können.

In einer weiteren besonders bevorzugten Ausführungsform besteht die Adapterplatte aus mindestens zwei plattenförmigen Elementen, die aufeinanderliegend, d.h. in Art einer Sandwichanordnung, angeordnet sind und aus unterschiedlichen Materialien bestehen. Dabei weist das Material, aus dem das eine plattenförmige Element hergestellt ist, eine kleinere Wärmeleitfähigkeit auf, als das Material, aus dem das andere plattenförmige Element hergestellt ist. Besonders bevorzugt sind die Fluidkanalauslässe in dem plattenförmigen Element angeordnet, das aus dem Material mit höherer Wärmeleitfähigkeit gefertigt ist. Daher ist das plattenförmige Element mit der geringeren Wärmeleitfähigkeit für die Anordnung an der Abdeckplatte vorgesehen.

Es hat sich gezeigt, dass durch diese Ausbildung der Wärmefluss von Heißkanal in Richtung Abdeckplatte deutlich reduziert werden kann, was zu einer nicht unerheblichen Energieeinsparung führt, da weniger Wärme in den Heißkanal zugeführt werden muss, um die Schmelze plastifiziert zu halten.

In einer weiteren bevorzugten Ausführungsform ist vorgesehen, dass die Adapterplatte aus mindestens zwei Adapterplattensegmenten besteht, wobei jedes der mindestens zwei Adapterplattensegmente mindestens einen Fluidkanalauslass aufweist und zumindest ein Fluidkanal sich über die mindestens zwei Adapterplattensegmente erstreckt. Durch die mehrteilige Ausgestaltung lässt sich die Adapterplatte leichter herstellen und auch einfacher in Spritzgießmaschinen montieren. In einer weiteren bevorzugten Ausführungsform ist vorgesehen, dass die Adapterplatte eine Durchgangsöffnung zur Aufnahme eines Angussrohrs einer Spritzgießmaschine aufweist.

In einer weiteren bevorzugten Ausführungsform ist ein dritter Fluidkanal zur Führung eines Temperierfluids vorgesehen. Als Temperierfluid kann beispielsweise Wasser verwendet werden. Das Wasser kann bevor es in den Fluidkanal eingebracht wird, temperiert werden, um die Adapterplatte abzukühlen oder aufzuheizen.

Es werden mehrere Modulsysteme bereitgestellt, welche jeweils aus einer erfindungsgemäßen Adapterplatte, einer Mehrzahl von Kolbengehäusen, in denen jeweils ein mit einer Verschlussnadel verbundener Kolben angeordnet ist, einer Heißkanalverteilerplatte, in der ein Heißkanal angeordnet ist, und einer Mehrzahl von Düsengehäusen, die derart angeordnet sind, dass durch eine Bewegung von einem der Kolben, die mit diesem Kolben verbundene Verschlussnadel eine Öffnung im Düsengehäuse wahlweise öffnet oder verschließt, bestehen.

In einer bevorzugten Ausführungsform entspricht in einem Modulsystem die Anzahl der ersten Fluidausläße der Anzahl der Kolbengehäuse und der Anzahl der Düsengehäuse.

Solche Modulsysteme können vom Spritzgießmaschinenhersteller hergestellt und bevorratet werden. Sobald die gewünschte Anzahl der Heißkanalausgänge einer Spritzgießmaschine feststeht, werden dann die Abdeckplatte und die Heißkanalplatte hergestellt und danach die gewünschte Anzahl von Modulsystemen eingesetzt und mit der Heißkanalplatte verschraubt. Beispielsweise kann das Modulsystem aus einer Adapterplatte mit 16 ersten und 16 zweiten Fluidkanalauslässen, 16 Kolbengehäusen, einer Heißkanalverteilerplatte und 16 Düsengehäusen bestehen. Zur Herstellung einer Spritzgießmaschine mit 96 Heißkanalausgängen werden dann sechs Modulsysteme zwischen Abdeckplatte und Heißkanalplatte montiert.

Zur Herstellung einer Spritzgießmaschine mit 192 Heißkanalausgängen werden zwölf Modulsysteme benötigt.

Durch diese Maßnahme kann die Lieferzeit solcher Spritzgießmachinen deutlich reduziert werden, da die Modulsystem bevorratet werden können und für eine Vielzahl von Spritzgießmaschinen unterschiedlichster Ausprägung verwendet werden können.

Mit Vorteil weist das Modulsystem bereits ein Angussrohr und besonders bevorzugt auch eine Heißkanalverteilerplatte auf, wobei sich das Angussrohr durch die Adapterplatte hindurch erstreckt. Bei dieser Ausführungsform entfällt die aufwändige Positionierung der Kolbengehäuse bzw. der Adapterplatte relativ zum Angussrohr.

In einer besonders bevorzugten Ausführungsform weist die Abdeckplatte einen ersten und einen zweiten Fluidauslass auf, wobei der erste Fluidauslass der Abdeckplatte mit dem ersten Fluideinlass der Adapterplatte und der zweite Fluidauslass der Abdeckplatte mit dem zweiten Fluidauslass der Adapterplatte verbunden ist.

Demnach wird die Adapterplatte über die Abdeckplatte mit den Steuerfluiden versorgt.

In einer weiteren bevorzugten Ausführungsform ist vorgesehen, dass der Heißkanal in einer Heißkanalverteilerplatte angeordnet ist und die Adapterplatte an der Heißkanalverteilerplatte befestigt ist. In einer weiteren bevorzugten Ausführungsform ist vorgesehen, dass die Adapterplatte mit der Abdeckplatte in allen Richtungen senkrecht zur Verschlussnadelachse formschlüssig miteinander verbunden sind, in Richtung der Verschlussnadelachsen jedoch eine Relativbewegung möglich ist. Beispielsweise können Adapterplatte und Abdeckplatte miteinander verstiftet sein, d.h. Adapterplatte oder Abdeckplatte weisen einen Stift und das korrespondierende andere Element ein entsprechendes Loch auf, in das der Stift eingreift.

In einer weiteren bevorzugten Ausführungsform ist vorgesehen, dass jede Verschlussnadel von einem der Kolbengehäuse durch die Heißkanalverteilerplatte in ein Düsengehäuse geführt wird, welches eine durch die Verschlussnadel verschließbare Öffnung aufweist, wobei zwischen Düsengehäuse und Abdeckplatte ein Federelement angeordnet ist. Durch diese Maßnahme ist sichergestellt, dass die Adapterplatte mit ausreichender Kraft auf das Kolbengehäuse gedrückt wird, um die entsprechenden Fluidkanäle gegeneinander abzudichten. Grundsätzlich kann das Federelement zwischen Deckplatte und Adapterplatte, zwischen Kolbengehäuse und Heißkanalverteilerplatte oder zwischen Heißkanalverteilerplatte und Düsengehäuse angeordnet sein.

In einer weiteren besonders bevorzugten Ausführungsform ist vorgesehen, dass Kolbengehäuse und/oder Adapterplatte eine erste kreisförmige Nut aufweist bzw. aufweisen, in der ein erster O-Ring angeordnet ist, wobei der erste O-Ring den ersten Fluideinlass des Kolbengehäuses gegenüber dem zweiten Fluideinlass des Kolbengehäuses abdichtet.

Des Weiteren kann Kolbengehäuse und/oder Adapterplatte eine zweite kreisförmige Nut aufweisen, in der ein zweiter O-Ring angeordnet ist, wobei der erste Fluideinlass des Kolbengehäuses zwischen erstem und zweitem O-Ring angeordnet ist.

Weitere Vorteile, Merkmale und Anwendungsmöglichkeiten der vorliegenden Erfindung werden deutlich anhand der folgenden Beschreibung einiger Ausführungsformen und der zugehörigen Figuren. Es zeigen:
- Figur 1: eine Querschnittsansicht einer ersten erfindungsgemäßen Ausführungsform der Spritzgießmaschine,
- Figur 2: eine perspektivische Explosionsansicht der Spritzgießmaschine von Figur 1,
- Figur 3: eine perspektivische Ansicht eines Modulsystems einer zweiten Ausführungsform der Erfindung,
- Figur 4: eine Querschnittsansicht des Moduls von Figur 3,
- Figur 5: eine perspektivische Explosionsansicht einer dritten Ausführungsform der Erfindung und
- Figur 6: eine Schnittansicht der Ausführungsform von Figur 5.

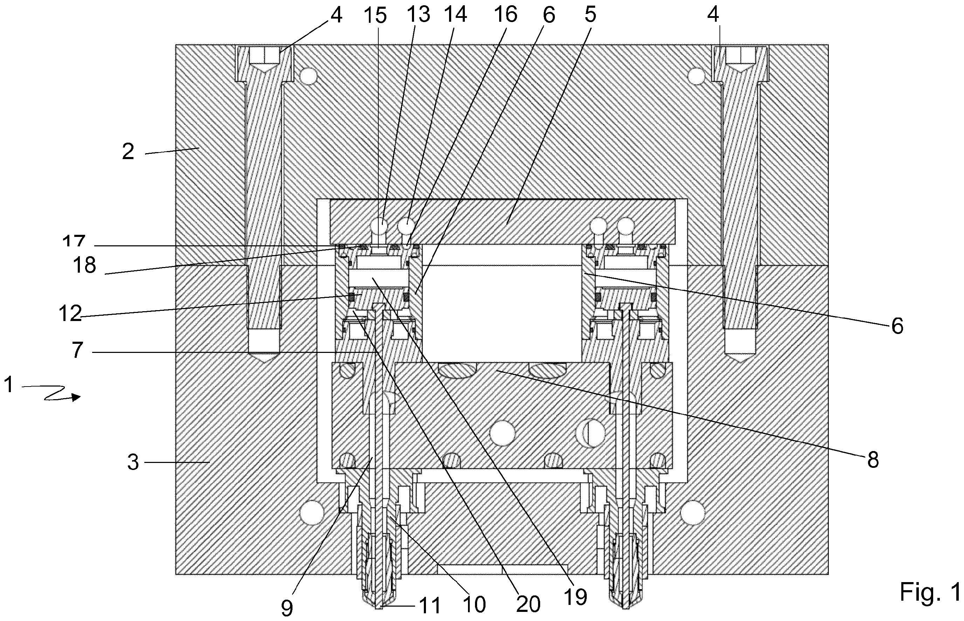

In Figur 1 ist eine erfindungsgemäße Spritzgießmaschine dargestellt. Diese Maschine weist eine Heißkanalplatte 3 und eine auf dieser aufliegende Abdeckplatte 2 auf, die mit Hilfe der Schrauben 4 miteinander verschraubt sind. Die Abdeckplatte 2 und die Heißkanalplatte 3 bilden einen Hohlraum, in dem eine Adapterplatte 5, eine Mehrzahl von Kolbengehäusen 6, eine Heißkanalverteilerplatte 8 sowie mehrere Düsengehäuse 10 angeordnet sind. Die Düsengehäuse 10 erstrecken sich durch Öffnungen in der Heißkanalplatte 3.

Mit der gezeigten Spritzgießmaschine 1 können entsprechende Formwerkzeuge, wie zum Beispiel PET-Vorformlinge, hergestellt werden. Die entsprechenden Formnester werden dazu unterhalb der Düsengehäuse 10 angeordnet.

In dem Kolbengehäuse 6 ist ein Kolben 12 angeordnet, der sich innerhalb des Gehäuses hin- und herbewegen kann und das Gehäuse in zwei Kammern 19 und 20 unterteilt. Mit dem Kolben 12 ist eine Verschlussnadel 7 verbunden, die sich von dem Kolbengehäuse durch die Heißkanalverteilerplatte 8 über das Düsengehäuse 10 bis zur Öffnung 11 im Düsengehäuse 10 erstreckt. In der Heißkanalverteilerplatte 8 ist ein Teil des Heißkanals 9 angeordnet, der mit erhitzter, plastifizierter Schmelze im Betrieb befüllt ist. Wird nun der Kolben 12 nach oben bewegt, so bewegt sich die Verschlussnadel 7 ebenfalls nach oben und gibt die Öffnung 11 im Düsengehäuse 10 frei, so dass Schmelze aus der Öffnung 11 in bereitgestellte Formnester abgegeben werden kann.

Um den Kolben 12 zu bewegen, werden die Kammern 19 und 20 wahlweise mit einem Steuerfluid, zum Beispiel Luft, beaufschlagt. Dazu weist das Kolbengehäuse 6 einen ersten Fluideinlass 15, der mit der oberen Kammern 19 verbunden ist, und einen zweiten Fluideinlass 16, der mit der unteren Kammer 20 verbunden ist, auf. Die Zuführung des Steuerfluids in die Kolbengehäuse 6 erfolgt über die Adapterplatte 5, die sich über mehrere Kolbengehäuse 6 erstreckt. Die Adapterplatte 5 weist einen ersten Fluidauslass 13 und einen zweiten Fluidauslass 14 auf, die mit den Fluideinlässen des Kolbengehäuses 6 in Kommunikation stehen. Zur Abdichtung der Fluidkanäle untereinander und zur Außenseite stehen in entsprechende kreisförmige Nuten eingebrachte O-Ringe 18 und 17 zur Verfügung.

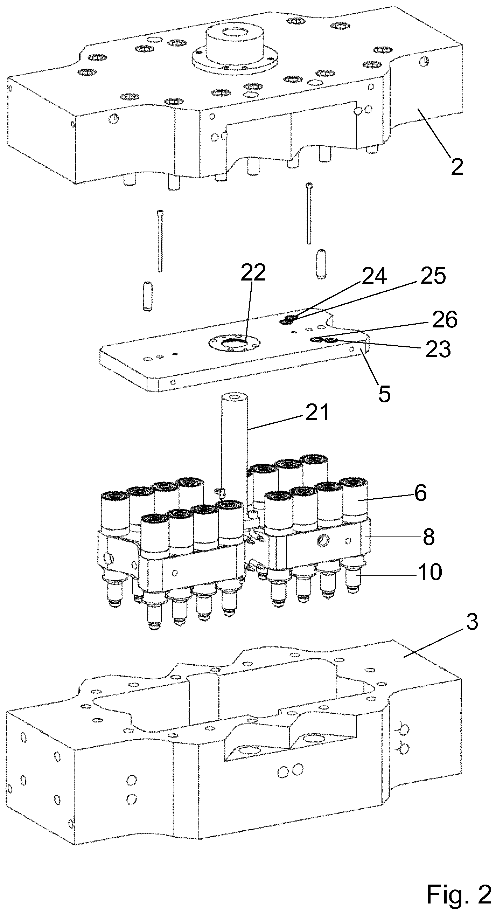

In Figur 2 ist eine Explosionsansicht der Spritzgießmaschine von Figur 1 dargestellt. Man erkennt hier, dass die Heißkanalverteilerplatte 8 insgesamt 16 Düsengehäuse 10 und entsprechend 16 Kolbengehäuse 6 aufweist, die um ein Angussrohr 21 herum gruppiert sind. Über das Angussrohr 21 kann plastifizierte Schmelze in die Heißkanalverteilerplatte 8 übergeben werden. Alternativ dazu könnte die plastifizierte Schmelze seitlich zugeführt werden, so dass auf das vertikale Angussrohr verzichtet werden kann.

Die Adapterplatte 5 weist eine Durchgangsöffnung 22 auf, durch die das Angussrohr 21 geführt werden kann. Die gezeigte Adapterplatte 5 verschließt somit in dem gezeigten Beispiel insgesamt 16 Kolbengehäuse 6. Die Adapterplatte zeigt in diesem Beispiel zwei erste Fluidkanäle 23, 24, die mit dem ersten Fluideinlass 13 verbunden sind und zwei zweite Fluideinlässe 25, 26, die mit dem zweiten Fluidauslass 14 verbunden sind. Die Fluideinlässe 23, 26 versorgen die in Figur 2 vorne angeordneten acht Kolbengehäuse mit Steuerfluid, während die ersten und zweiten Fluideinlässe 24, 25 die hinten dargestellten Kolbengehäuse mit Steuerfluid versorgen.

Die Adapterplatte 5 ist mittels der Schrauben 28 mit der Heißkanalverteilerplatte 8 verschraubt. Die Stifte 27, die in entsprechende Bohrungen sowohl in der Abdeckplatte 2 als auch in der Adapterplatte 5 eingreifen, sorgen für eine Ausrichtung der Adapterplatte relativ zur Abdeckplatte in der Ebene der Adapterplatte 5, wobei jedoch eine Relativbewegung zwischen Adapterplatte 5 und Abdeckplatte 2 in begrenztem Maße aufgrund der Verstiftung mittels der Stifte 27 möglich ist.

Die Adapterplatte 5 bildet zusammen mit der Heißkanalverteilerplatte 8, den Kolbengehäusen 6, den Düsengehäusen 10 und dem Angussrohr 21 ein Modulsystem, das bereits vormontiert bereitgestellt werden kann. Bei der Bestückung der Heißkanalplatte 3 mit den entsprechenden Düsen kann dann auf das Modul zugegriffen werden.

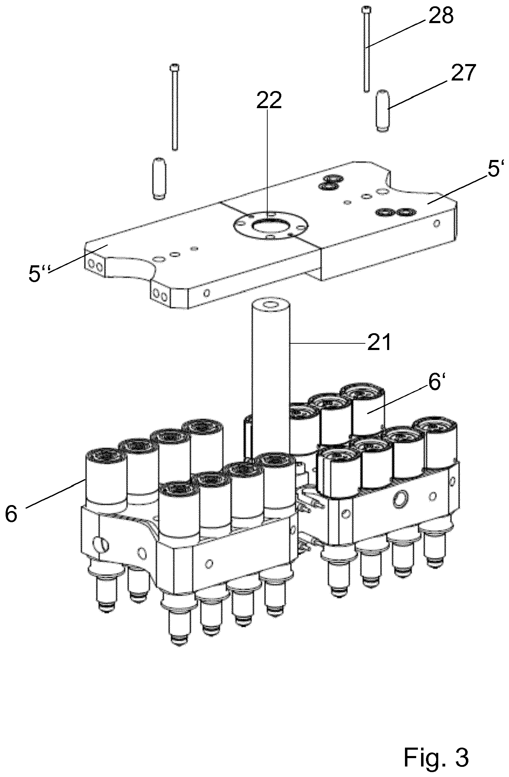

In Figur 3 ist ein solches Modul einer zweiten Ausführungsform in einer Explosionsansicht gezeigt.

Soweit möglich, wurden gleiche Bezugszahlen für gleiche Elemente verwendet. Bei der zweiten Ausführungsform ist die Adapterplatte 5 aus zwei Segmenten 5' und 5" hergestellt. Die beiden Segmente 5' und 5" haben eine unterschiedliche Dicke. Grundsätzlich können die Segmente jedoch auch die gleiche Dicke haben. Die Verwendung von Segmenten unterschiedlicher Dicke ermöglicht die Verwendung von unterschiedlich hoch aufbauenden Kolbengehäusen 6 bzw. 6'. Man erkennt in Figur 3, dass neben den aus Figur 2 bekannten Kolbengehäusen 6 hier teilweise flachere Kolbengehäuse 6' verwendet worden sind. Um diese Kolbengehäuse dennoch sicher zwischen Abdeckplatte 2 und Heißkanalplatte 3 zu montieren, muss die Adapterplatte 5 den Höhenunterschied ausgleichen, so dass die Adapterplatte das Segment 5' aufweist.

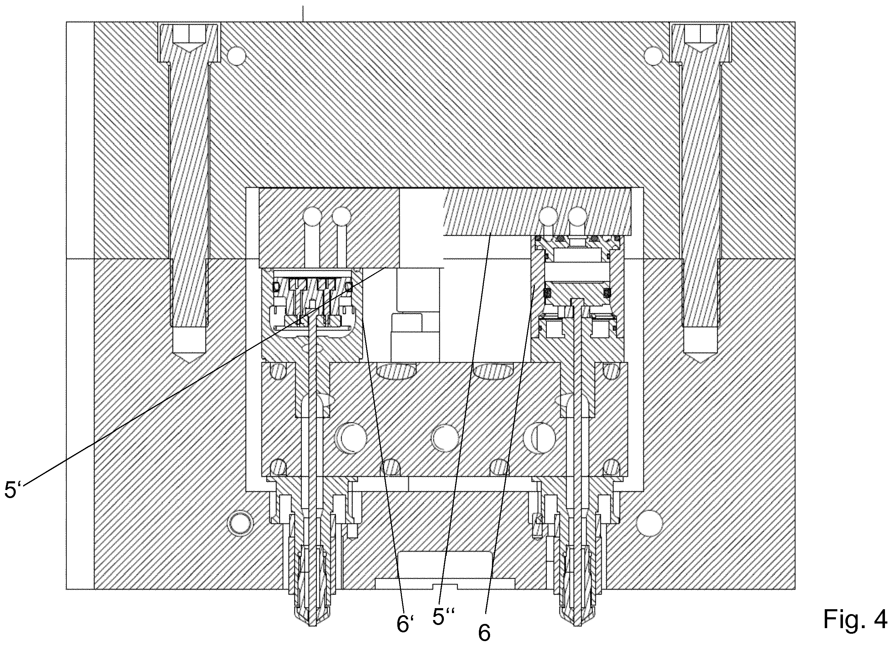

Dies wird deutlich an der entsprechenden Schnittansicht von Figur 4. Man erkennt hier deutlich, dass Kolbengehäuse 6' mit geringerer Höhe und Kolbengehäuse 6 mit größerer Höhe verwendet worden sind. Beide Ausführungsformen der Kolbengehäuse 6, 6' können innerhalb einer Spritzgießmaschine verwendet werden, aufgrund der segmentartigen Ausbildung der Adapterplatte 5 mit den Segmenten 5' und 5" mit unterschiedlicher Dicke.

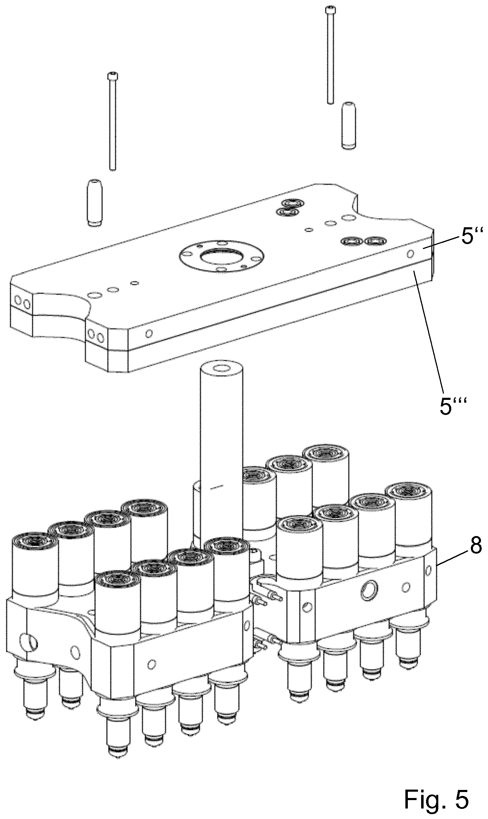

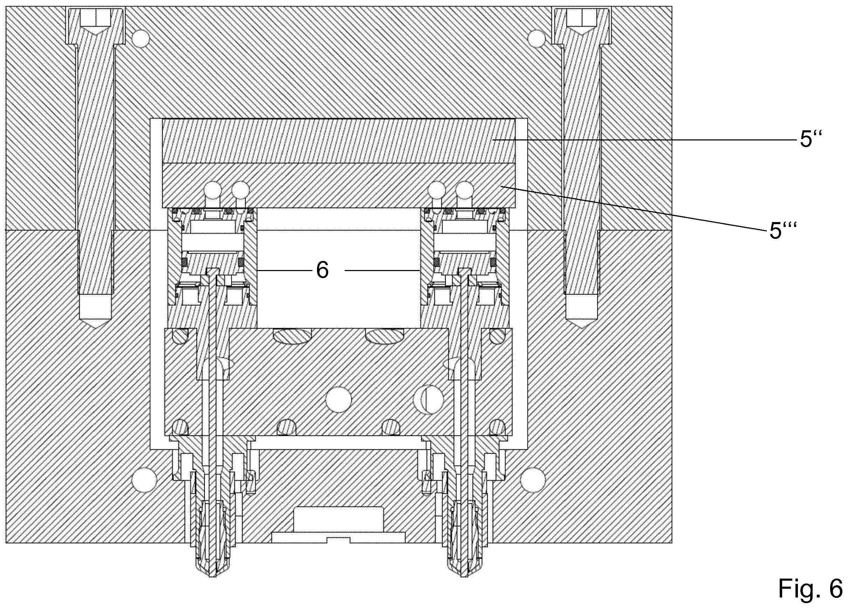

In den Figuren 5 und 6 ist eine dritte Ausführungsform der Erfindung gezeigt, bei der die Adapterplatte 5 aus zwei Teilen 5'" und 5"" besteht, die sandwichartig aufeinander liegen. Hier ist das Element 5"" aus einem anderen Material gefertigt als das Element 5'" und zwar aus einem Material mit geringerer Wärmeleitfähigkeit, um eine Wärmedämmung zwischen dem temperierten Heißkanalverteiler 8 und der im Allgemeinen gekühlten Abdeckplatte 2 zu gewährleisten. Durch das Vorsehen einer entsprechend geteilten Abdeckplatte mit Wärmedämmung kann unter Umständen eine separate Kühlung der Abdeckplatte 2 entfallen. In jedem Fall wird jedoch ein geringerer Durchfluss von Kühlmittel notwendig, da weniger Wärmeenergie über die Kolbengehäuse übertragen wird.

### Bezugszeichenliste

- 2: Abdeckplatte
- 3: Heißkanalplatte
- 4: Schrauben
- 5: Adapterplatte
- 5', 5": Segmente
- 5"', 5"": Teile der Adapterplatte
- 6,6': Kolbengehäuse
- 7: Verschlussnadel
- 8: Heißkanalverteilerplatte
- 9: Heißkanal
- 10: Düsengehäuse
- 11: Öffnung
- 12: Kolben
- 13, 15: erster Fluideinlass
- 14, 16: zweiter Fluidauslass
- 17,18: O-Ring
- 19,20: Kammer
- 21: Angussrohr
- 22: Durchgangsöffnung
- 23, 24: erster Fluidkanal
- 25, 26: zweiter Fluidkanal
- 27: Stifte
- 28: Schrauben

## Patentansprüche

1. Spritzgießmaschine mit einer Abdeckplatte (2), einer Heißkanalplatte (3) mit einer Mehrzahl von Öffnungen zur Aufnahme von Düsengehäusen (10) und einer Mehrzahl von Modulsystemen, **dadurch gekennzeichnet, dass** die Modulsysteme jeweils aus einer Adapterplatte (5), einer Mehrzahl von Kolbengehäusen (6, 6'), in denen jeweils ein mit einer Verschlussnadel (7) verbundener Kolben (12) angeordnet ist, einer Heißkanalverteilerplatte (8), in der ein Heißkanal (9) angeordnet ist, und einer Mehrzahl von Düsengehäusen (10), die derart angeordnet sind, dass durch eine Bewegung von einem der Kolben (12), die mit diesem Kolben (12) verbundene Verschlussnadel (7) eine Öffnung (11) im Düsengehäuse (10) wahlweise öffnet oder verschließt, bestehen, wobei die Adapterplatte (5) die Abdeckplatte (2) mit einer Mehrzahl von Kolbengehäusen (6, 6') einer Spritzgießmaschine verbindet, wobei die Adapterplatte (5) einen ersten Fluidkanal (23, 24) zur Zuführung eines ersten Steuerfluids in die Kolbengehäuse (6, 6') und einen zweiten Fluidkanal (25, 26) zur Zuführung eines zweiten Steuerfluids in die Kolbengehäuse (6, 6') aufweist, wobei der erste Fluidkanal (23, 24) mindesten einen ersten Fluidkanaleinlass (13, 15) zur Aufnahme des ersten Steuerfluid und eine Mehrzahl von ersten Fluidkanalauslässen (14, 16) zur Abgabe des ersten Steuerfluids an die Kolbengehäuse (6, 6') aufweist und der zweite Fluidkanal (25, 26) mindesten einen zweiten Fluidkanaleinlass zur Aufnahme des zweiten Steuerfluids und eine Mehrzahl von zweiten Fluidkanalauslässen zur Abgabe des zweiten Steuerfluids an die Kolbengehäuse (6, 6') aufweist.

2. Spritzgießmaschine nach Anspruch 1, **dadurch gekennzeichnet, dass** die Platte (5) eine obere Fläche, eine untere Fläche und eine die obere mit der unteren Fläche verbindende, umlaufende Kantenfläche aufweist, wobei die Mehrzahl der ersten Fluidkanalausläße und die Mehrzahl der zweiten Fluidkanalausläße auf der unteren Fläche angeordnet sind, wobei vorzugsweise der erste Fluidkanaleinlass und der zweite Fluidkanaleinlass auf der oberen Fläche angeordnet sind.

3. Spritzgießmaschine nach Anspruch 1 oder 2, **dadurch gekennzeichnet, dass** sich der Querschnitt des ersten Fluidkanaleinlass von den Querschnitten der ersten Fluidkanalauslässen unterscheidet, wobei sich vorzugsweise der Querschnitt des zweiten Fluidkanaleinlass von den Querschnitten der zweiten Fluidkanalauslässen unterscheidet.

4. Spritzgießmaschine nach einem der Ansprüche 1 bis 3, **dadurch gekennzeichnet, dass** die Adapterplatte (5) aus mindestens zwei plattenförmigen Elementen besteht, die aufeinanderliegend angeordnet sind und aus unterschiedlichem Material bestehen, wobei das Material, aus dem das eine plattenförmige Element hergestellt ist, eine kleinere Wärmeleitfähigkeit aufweist, als das Material, aus dem das andere plattenförmige Element hergestellt ist, wobei vorzugsweise die Fluidkanalauslässe in dem plattenförmigen Element angeordnet sind, das aus dem Material mit höherer Wärmeleitfähigkeit gefertigt ist.

5. Spritzgießmaschine nach einem der Ansprüche 1 bis 4, **dadurch gekennzeichnet, dass** die Adapterplatte aus mindestens zwei Adapterplattensegmenten (5', 5") besteht, wobei jedes der mindestens zwei Adapterplattensegmente (5', 5") mindestens einen Fluidkanalauslass aufweist und zumindest ein Fluidkanal sich über die mindestens zwei Adapterplattensegmente (5', 5") erstreckt.

6. Spritzgießmaschine nach einem der Ansprüche 1 bis 5, **dadurch gekennzeichnet, dass** die Adapterplatte (5) eine Durchgangsöffnung (22) zur Aufnahme eines Angusskanals der Spritzgießmaschine aufweist.

7. Spritzgießmaschine nach einem der Ansprüche 1 bis 6, **dadurch gekennzeichnet, dass** ein dritter Fluidkanal zur Führung eines Temperierfluids vorgesehen ist.

8. Spritzgießmaschine nach einem der Ansprüche 1 bis 7 mit einem Heißkanal zur Zuführung einer plastifizierten Schmelze in eine Mehrzahl von Formwerkzeugen, einer Mehrzahl von Verschlussnadeln (7) zum wahlweisen Verschließen oder Öffnen des Heißkanals (9), wobei jede Verschlussnadel (7) einen mit dieser verbundenen Kolben (12) aufweist, der in einem Kolbengehäuse (6. 6') mit einer Öffnung angeordnet ist und das Gehäuse in eine erste und eine zweite Kammer unterteilt, wobei das Kolbengehäuse (6, 6') einen ersten Fluideinlass, der mit der ersten Kammer in Verbindung steht, und einen zweiten Fluideinlass, der mit der zweiten Kammer in Verbindung steht, aufweist, die derart angeordnet sind, dass Fluid über den ersten Fluidauslass der Adapterplatte (5) in den ersten Fluideinlass des Kolbengehäuses und Fluid über den zweiten Fluidauslass der Abdeckplatte (2) in den zweiten Fluideinlass des Kolbengehäuses (6, 6') überführt werden kann, so dass der Kolben (12) beidseitig mit Fluid beaufschlagt werden kann, wobei vorzugsweise die Abdeckplatte (2) einen ersten und einen zweiten Fluidauslass (14, 16) aufweist, wobei der erste Fluidauslass der Abdeckplatte (2) mit dem ersten Fluideinlass der Adapterplatte (5) und der zweite Fluidauslass der Abdeckplatte (2) mit dem zweiten Fluidauslass der Adapterplatte (5) verbunden ist.

9. Spritzgießmaschine nach Anspruch 8, **dadurch gekennzeichnet, dass** der Heißkanal in einer Heißkanalverteilerplatte angeordnet ist und die Adapterplatte (5) an der Heißkanalverteilerplatte befestigt ist.

10. Spritzgießmaschine nach einem der Ansprüche 8 bis 9, **dadurch gekennzeichnet, dass** die Adapterplatte (5) mit der Abdeckplatte (2) in allen Richtungen senkrecht zur Verschlussnadelachsen formschlüssig miteinander verbunden sind, in Richtung der Verschlussnadelachsen jedoch eine Relativbewegung möglich ist.

11. Spritzgießmaschine nach einem der Ansprüche 8 bis 10, **dadurch gekennzeichnet, dass** jede Verschlussnadel (7) von einem der Kolbengehäuse (6, 6') durch die Heißkanalverteilerplatte in ein Düsengehäuse (10) geführt wird, welches eine durch die Verschlussnadel (7) verschließbare Öffnung aufweist, wobei vorzugsweise zwischen Düsengehäuse (10) und Abdeckplatte (2) ein Federelement angeordnet ist.

12. Spritzgießmaschine nach einem der Ansprüche 8 bis 11, **dadurch gekennzeichnet, dass** zwischen Abdeckplatte (2) und Adapterplatte (5) oder zwischen Kolbengehäuse (10) und Heißkanalverteilerplatte (8) ein Federelement angeordnet ist.

13. Spritzgießmaschine nach einem der Ansprüche 8 bis 12, **dadurch gekennzeichnet, dass** Kolbengehäuse (10) und/oder Adapterplatte (5) eine erste kreisförmige Nut aufweist/aufweisen, in der ein erster O-Ring angeordnet ist, wobei der erste O-Ring den ersten Fluideinlass des Kolbengehäuses (6, 6') gegenüber dem zweiten Fluideinlass des Kolbengehäuses (6, 6') abdichtet, wobei vorzugsweise Kolbengehäuse (6, 6') und/oder Adapterplatte (5) eine zweite kreisförmige Nut aufweist/aufweisen, in der ein zweiter O-Ring angeordnet ist, wobei der erste Fluideinlass des Kolbengehäuses (6, 6') zwischen erstem und zweitem O-Ring angeordnet ist.

14. Spritzgießmaschine nach einem der vorstehenden Ansprüche, **dadurch gekennzeichnet, dass** die Mehrzahl von Modulsystemen an der Heißkanalplatte (3) befestigt sind.

## Claims

1. An injection moulding machine having a cover plate (2), a hot runner plate (3) having a plurality of openings for receiving nozzle housings (10) and a plurality of module systems, **characterised in that** the module systems respectively comprise an adaptor plate (5), a plurality of piston housings (6, 6') in each of which is disposed a respective piston connected to a closure needle (7), a hot runner distributor plate (8) in which a hot runner (9) is arranged, and a plurality of nozzle housings (10) which are so arranged that by a movement of one of the pistons (12) the closure needle connected (7) to said piston (12) selectively opens or closes an opening (11) in the nozzle housing (10), wherein the adaptor plate (5) connects the cover plate (2) to a plurality of piston housings (6, 6') of an injection moulding machine, wherein the adaptor plate (5) has a first fluid passage (23, 24) for feeding a first control fluid into the piston housings (6, 6') and a second fluid passage (25, 26) for feeding a second control fluid into the piston housings (6, 6'), wherein the first fluid passage (23, 24) has at least one first fluid passage inlet (13, 15) for receiving the first control fluid and a plurality of first fluid passage outlets (14, 16) for discharge of the first control fluid to the piston housings (6, 6') and the second fluid passage (25, 26) has at least one second fluid passage inlet for receiving the second control fluid and a plurality of second fluid passage outlets for discharge of the second control fluid to the piston housings (6. 6').

2. An injection moulding machine according to claim 1 **characterised in that** the plate (5) has an upper surface, a lower surface and a peripherally extending edge surface connecting the upper surface to the lower surface, wherein the plurality of the first fluid passage outlets and the plurality of the second fluid passage outlets are arranged on the lower surface, wherein preferably the first fluid passage inlet and the second fluid passage inlet are arranged on the upper surface.

3. An injection moulding machine according to claim 1 or claim 2 **characterised in that** the cross-section of the first fluid passage inlet differs from the cross-sections of the first fluid passage outlets, wherein preferably the cross-section of the second fluid passage inlet differs from the cross-sections of the second fluid passage outlets.

4. An injection moulding machine according to one of claims 1 to 3 **characterised in that** the adaptor plate (5) comprises at least two plate-shaped elements which are arranged in mutually superposed relationship and comprise differing material, wherein the material from which the one plate-shaped element is made has a lower level of thermal conductivity than the material from which the other plate-shaped element is made, wherein preferably the fluid passage outlets are arranged in the plate-shaped element made from the material with the higher level of thermal conductivity.

5. An injection moulding machine according to one of claims 1 to 4 **characterised in that** the adaptor plate comprises at least two adaptor plate segments (5', 5"), wherein each of the at least two adaptor plate segments (5', 5") has at least one fluid passage outlet and at least one fluid passage extends over the at least two adaptor plate segments (5', 5").

6. An injection moulding machine according to one of claims 1 to 5 **characterised in that** the adaptor plate (5) has a through opening (22) for receiving a sprue passage of the injection moulding machine.

7. An injection moulding machine according to one of claims 1 to 6 **characterised in that** there is provided a third fluid passage for carrying a temperature-control fluid.

8. An injection moulding machine according to one of claims 1 to 7 comprising a hot runner for feeding a plasticized molten material into a plurality of moulds, a plurality of closure needles (7) for selectively closing or opening the hot runner (9), wherein each closure needle (7) has a piston (12) which is connected thereto and which is disposed in a piston housing (6, 6') having an opening and subdivides the housing into a first and a second chamber, wherein the piston housing (6, 6') has a first fluid inlet communicating with the first chamber and a second fluid inlet communicating with the second chamber, which are so arranged that fluid can be transferred by way of the first fluid outlet of the adaptor plate (5) into the first fluid inlet of the piston housing and fluid can be transferred by way of the second fluid outlet of the cover plate (2) into the second fluid inlet of the piston housing (6, 6') so that the piston (12) can be acted upon with fluid on both sides, wherein preferably the cover plate (2) has a first and a second fluid outlet (14, 16), wherein the first fluid outlet of the cover plate (2) is connected to the first fluid inlet of the adaptor plate (5) and the second fluid outlet of the cover plate (5) is connected to the second fluid outlet of the adaptor plate (5).

9. An injection moulding machine according to claim 8 **characterised in that** the hot runner is arranged in a hot runner distributor plate and the adaptor plate (5) is fixed to the hot runner distributor plate.

10. An injection moulding machine according to one of claims 8 to 9 **characterised in that** the adaptor plate (5) is connected in positively locking relationship to the cover plate (2) in all directions perpendicularly to the closure needle axes but a relative movement is possible in the direction of the closure needle axes.

11. An injection moulding machine according to one of claims 8 to 10 **characterised in that** each closure needle (7) is guided by one of the piston housings (6, 6') through the hot runner distributor plate into a nozzle housing (10) which has an opening closable by the closure needle (7), a spring element preferably being arranged between the nozzle housing and the cover plate (2).

12. An injection moulding machine according to one of claims 8 to 12 **characterised in that** a spring element is arranged between the cover plate (2) and the adapter plate (5) or between the piston housing (10) and the hot runner distributor plate (8).

13. An injection moulding machine according to one of claims 8 to 12 **characterised in that** the piston housing (10) and/or the adaptor plate (5) has/have a first circular groove in which a first O-ring is arranged, wherein the first O-ring seals off the first fluid inlet of the piston housing (6, 6') with respect to the second fluid inlet of the piston housing (6, 6'), wherein preferably the piston housing (6, 6') and/or the adaptor plate (5) has/have a second circular groove in which a second O-ring is arranged, wherein the first fluid inlet of the piston housing (6, 6') is arranged between the first and second O-rings.

14. An injection moulding machine according to one of the preceding claims **characterised in that** the plurality of module systems are secured to the hot runner plate (3).

## Revendications

1. Machine à moulage par injection avec une plaque de couverture (2), une plaque de canal chaud (3) ayant une pluralité d'ouvertures destinées à recevoir des boîtiers de buse (10) et une pluralité de systèmes de module,
**caractérisée en ce que** les systèmes de module sont constitués, chacun, d'une plaque d'adaptateur (5), d'une pluralité de boîtiers de piston (6, 6') dans lesquels est disposé respectivement un piston (12) relié à une aiguille d'obturation (7), d'une plaque de répartition de canal chaud dans laquelle est disposée un canal (9), et d'une pluralité de boîtiers de buse (10) qui sont agencés de façon que, par un mouvement de l'un des pistons (12), l'aiguille d'obturation (7) reliée à ce piston (12) respectivement ouvre ou obture une ouverture (11) dans le boîtier de buse (10), la plaque d'adaptation (5) reliant la plaque de couverture (2) à une pluralité de boîtiers de piston (6, 6') d'une machine à moulage par injection, la plaque d'adaptation (5) comprenant un premier canal pour fluide (23, 24) destiné à emmener un premier fluide de commande dans les boîtiers de piston (6, 6') et un deuxième canal pour fluide (25, 26) destiné à emmener un deuxième fluide de commande dans les boîtiers de piston (6, 6'), le premier canal pour fluide (23, 24) comprenant au moins une première entrée de canal pour fluide (13, 15) pour recevoir le premier fluide de commande et une pluralité de premières sorties de canal pour fluide (14, 16) pour fournir le premier fluide de commande aux boîtiers de piston (6, 6') et le deuxième canal pour fluide (25, 26) comprenant au moins une deuxième entrée de canal pour fluide pour recevoir le deuxième fluide de commande et une pluralité de deuxièmes sorties de canal pour fluide pour fournir le deuxième fluide de commande aux boîtiers de piston (6, 6').

2. Machine à moulage par injection selon la revendication 1, **caractérisée en ce que** la plaque (5) comprend une surface supérieure, une surface inférieure et une surface de bord périphérique reliant la surface supérieure à la surface inférieure, la pluralité de premières sorties de canal et la pluralité des deuxièmes sorties de canal pour fluide étant disposées sur la surface inférieure, la première entrée de canal pour fluide et la deuxième entrée de canal pour fluide étant de préférence disposées sur la surface supérieure.

3. Machine à moulage par injection selon la revendication 1 ou 2, **caractérisée en ce que** la section transversale de la première entrée de canal pour fluide se différencie des sections transversales des premières sorties de canal pour fluide, la section transversale de la deuxième entrée de canal pour fluide se différenciant de préférence des sections transversales des deuxièmes sorties de canal pour fluide.

4. Machine à moulage par injection selon l'une des revendications 1 à 3, **caractérisée en ce que** la plaque d'adaptation (5) est constituée d'au moins deux éléments en forme de plaques qui sont disposés les uns par-dessus les autres et réalisés en un matériau différent, le matériau en lequel l'un des éléments en forme de plaques est réalisé présentant une conductivité thermique moindre que celle du matériau en lequel l'autre élément en forme de plaque est fabriqué, les sorties de canal pour fluide étant disposées, de préférence, dans l'élément en forme de plaque qui est réalisé en le matériau présentant la conductivité thermique plus élevée.

5. Machine à moulage par injection selon l'une des revendications 1 à 4, **caractérisée en ce que** la plaque d'adaptation est constituée d'au moins deux segments de plaque d'adaptation (5', 5"), chacun desdits au moins deux segments de plaque d'adaptation (5', 5") comprenant au moins une sortie de canal pour fluide et au moins un canal pour fluide s'étendant sur lesdits au moins deux segments de plaque d'adaptation (5' 5").

6. Machine à moulage par injection selon l'une des revendications 1 à 5, **caractérisée en ce que** la plaque d'adaptation (5) comprend une ouverture traversante (22) pour recevoir un canal d'injection de la machine à moulage par injection.

7. Machine à moulage par injection selon l'une des revendications 1 à 6, **caractérisée en ce qu'**un troisième canal pour fluide est prévu pour conduire un fluide de maintien de température.

8. Machine à moulage par injection selon l'une des revendications 1 à 7 avec un canal chaud pour emmener un matériau fondu rendu plastique dans une pluralité d'outils de moulage, une pluralité d'aiguilles d'obturation (7) pour, selon le choix, l'obturation ou l'ouverture du canal chaud (9), chaque aiguille d'obturation (7) comprenant, relié à celle-ci, un piston (12) qui est disposé dans un boîtier de piston (6, 6') ayant une ouverture et divise le boîtier en une première et une deuxième chambre, le boîtier de piston (6, 6') comprenant une première entrée de fluide qui est reliée à la première chambre, et une deuxième entrée de fluide qui est reliée à la deuxième chambre qui sont disposées de façon telle que du fluide peut être transporté via la première sortie de fluide de la plaque d'adaptation (5) dans la première entrée de fluide du boîtier de piston et que du fluide peut être transporté via la deuxième sortie de fluide de la plaque de couverture (2) dans la deuxième entrée de fluide du boîtier de piston (6, 6') si bien que le piston (12) puisse être alimenté en fluide des deux côtés, la plaque de couverture (2) comprenant de préférence une première et une deuxième sortie pour fluide (14, 16), la première sortie pour fluide de la plaque de couverture (2) étant reliée à la première entrée pour fluide de la plaque d'adaptation (5) et la deuxième sortie de la plaque de couverture (2) à la deuxième sortie de la plaque d'adaptation (5).

9. Machine à moulage par injection selon la revendication 8, **caractérisée en ce que** le canal chaud est disposé dans une plaque de distribution du canal chaud et que la plaque d'adaptation (5) est fixée sur la plaque de distribution du canal chaud.

10. Machine à moulage par injection selon l'une des revendications 8 à 9, **caractérisée en ce que** la plaque d'adaptation (5) est attachée à la plaque de couverture (2), dans toutes les directions, perpendiculairement aux axes des aiguilles d'obturation par complémentarité de forme, un mouvement relatif étant cependant possible en direction des axes des aiguilles d'obturation.

11. Machine à moulage par injection selon l'une des revendications 8 à 10, **caractérisée en ce que** chaque aiguille d'obturation (7) est guidée de l'un des boîtiers de piston (6, 6') à travers la plaque de distribution du canal chaud dans un boîtier de buse (10) qui comprend une ouverture pouvant être obturée par l'aiguille d'obturation (7), un élément de ressort étant disposé de préférence entre le boîtier de buse (10) et la plaque de couverture (2).

12. Machine à moulage par injection selon l'une des revendications 8 à 11, **caractérisée en ce qu'**un élément de ressort est disposé entre la plaque de couverture (2) et la plaque d'adaptation (5) ou entre le boîtier de piston (6, 6') et la plaque de distribution du canal chaud (8).

13. Machine à moulage par injection selon l'une des revendications 8 à 12, **caractérisée en ce que** le boîtier de piston (6, 6') et/ou la plaque d'adaptation (5) comprend/comprennent une rainure en forme de cercle dans laquelle est disposé un premier joint torique, le premier joint torique rendant étanche la première entrée du boîtier de piston (6, 6') par rapport à la deuxième entrée de fluide du boîtier de piston (6, 6'), le boîtier de piston (6, 6') et/ou la plaque d'adaptation (5) comprenant de préférence une deuxième rainure en forme de cercle dans laquelle est disposé un deuxième joint torique, la première entrée de fluide du boîtier de piston (6, 6') étant disposée entre le premier et le deuxième joint torique.

14. Machine à moulage par injection selon l'une des revendications précédentes, **caractérisée en ce que** la pluralité de systèmes de modules sont fixés à la plaque de canal chaud (3).
Machine à moulage par injection comprenant des plaques d'adaptateur
